# EUROPÄISCHE PATENTSCHRIFT

(11) **EP 3 804 943 B1**
(45) Veröffentlichungstag und Bekanntmachung des Hinweises auf die Patenterteilung: **01.06.2022**
(21) Anmeldenummer: 20199226.0
(22) Anmeldetag: 30.09.2020
(51) Int. Cl.: B29C 45/14, B29C 45/76

(54) **WERKZEUGHÄLFTE UND VERFAHREN ZUM HERSTELLEN EINES SPRITZGUSSTEILS MIT WENIGSTENS EINEM EINLEGETEIL**
TOOL HALF AND METHOD FOR MANUFACTURING AN INJECTION MOULDED PART WITH AT LEAST ONE INSERT
MOITIÉ D'OUTIL ET PROCÉDÉ DE FABRICATION D'UNE PIÈCE MOULÉE PAR INJECTION POURVUE D'AU MOINS UNE PIÈCE D'INSERTION

(30) Priorität: 08.10.2019 DE 102019126940
(43) Veröffentlichungstag der Anmeldung: 14.04.2021
(73) Patentinhaber: Lisa Dräxlmaier GmbH, 84137 Vilsbiburg (DE)
(72) Erfinder: Esterbauer, Peter, 5282 Ranshofen (AT); Püschel, Stefan, 4982 Obernberg/Inn (AT); Peterlechner, Hermann, 5145 Neukirchen (AT); Greifeneder, Daniel, 4963 St. Peter am Hart (AT); Rainer, Liedtke, 5280 Braunau/Inn (AT)

(56) Entgegenhaltungen:
- CH-A5- 634 505
- DD-A1- 251 103
- DE-A1- 3 135 259
- DE-A1- 10 322 622
- DE-A1-102011 120 403
- DE-U- 7 417 692
- US-A- 3 303 256
- US-A- 4 443 173

## Beschreibung

### Technisches Gebiet

Die vorliegende Erfindung betrifft eine Werkzeughälfte und ein Verfahren zum Herstellen eines Spritzgussteils mit wenigstens einem Einlegeteil.

### Stand der Technik

Es ist an sich bekannt, bei Spritzgussteilen Einlegeteile zu integrieren. Dafür werden solche Einlegeteile im Bereich einer Kavität eines Spritzgusswerkzeugs angeordnet und mit einem Kunststoff zumindest teilweise umspritzt. Derartige Einlegeteile können beispielsweise als mechanische Schnittstellen dienen, an denen andere Bauteile mit dem betreffenden Spritzgussteil verbunden werden können. So können Einlegeteile z.B. in Form von Schrauben, Bolzen, Stiften, Passstiften, Buchsen, Bundbuchsen, Gewindebuchsen, Muttern und dergleichen während der Herstellung der Spritzgussteile in diese integriert werden.

Das Handling und die Positionierung solcher Einlegeteile im Bereich einer Kavität eines Spritzgusswerkzeugs kann sich mitunter relativ aufwendig gestalten. Dies kann mit einer aufwendigen und kostenintensiven Peripherie, langen Zykluszeiten und einem relativ hohen Platzbedarf bei einer Spritzgussmaschine miteinhergehen.

Die DE 74 17 692 U beschreibt eine auf eine Werkzeughälfte einer Spritzgussmaschine aufsetzbare Beschickungsvorrichtung. Die Beschickungsvorrichtung weist eine Speicherplatte auf, in der mehrere Einlegeteile übereinander angeordnet aufgenommen werden können. Unterhalb von der Speicherplatte ist eine Verteilerplatte angeordnet. Diese kann eines der Einlegeteile aufnehmen und seitlich so weit verschieben, bis dieses schwerkraftbedingt in einen Formholraum der Werkzeughälfte gelangt. Danach wird die Beschickungsvorrichtung von der Werkzeughälfte entfernt, um Raum für das Aufsetzen von Spritzgussmaschinenteilen auf die Werkzeughälfte freizugeben, durch die eine Formmasse in den Formhohlraum gespritzt wird.

Die DE 313 52 59 A1 beschreibt eine Spritzgussmaschine mit einem Magazin zum Herstellen von umspritzten Einlegeteilen. Das Magazin kann mehrere der Einlegeteile übereinander angeordnet aufnehmen, die einzeln in einen Wirkbereich eines Auswerfers der Spritzgussmaschine gelangen können. Der Auswerfer dient einerseits dazu, bereits umspritzte Einlegeteile auszuwerfen und im gleichen Arbeitsschritt das nächste Einlegeteil im Bereich eines Formholraums einer Werkzeughälfte der Spritzgussmaschine zu positionieren. Dazu wird der Auswerfer in eine Entformposition bewegt. Die US44443173, die CH634505 und die DD251103 sowie die DE10322622 offenbaren ganz allgemein ein Verfahren und Werkzeug zum Zuführen eines Einlegeteils durch zwei Kanäle, d.h. einen Magazinzuführkanal und einen Einlegeteilbeförderungkanal innerhalb einer Werkzeughälfte.

### Beschreibung der Erfindung

Es ist daher die Aufgabe der vorliegenden Erfindung, eine Lösung bereitzustellen, mittels welcher ein Spritzgussteil mit wenigstens einem integrierten Einlegeteil besonders einfach hergestellt werden kann.

Diese Aufgabe wird durch eine Werkzeughälfte für eine Spritzgussmaschine sowie durch ein Verfahren zum Herstellen eines Spritzgussteils mit den Merkmalen der unabhängigen Ansprüche gelöst. Weitere mögliche Ausgestaltungen der Erfindung sind insbesondere in den abhängigen Ansprüchen angegeben.

Die erfindungsgemäße Werkzeughälfte für eine Spritzgussmaschine zum Herstellen eines Spritzgussteils mit wenigstens einem Einlegeteil umfasst einen Formbereich, der zumindest einen Teil einer Kavität für das Spritzgussteil bildet. Bei dem Formbereich kann es sich um ein separates Bauteil, z.B. einen Formeinsatz, handeln, es ist aber genauso gut möglich, dass der Formbereich kein separates Bauteil ist, sondern z.B. in eine Formplatte eingearbeitet ist. Der Formbereich kann eine oder mehrere Vertiefungen aufweisen, welche eine Negativform für das Spritzgussteil bilden. Des Weiteren umfasst die Werkzeughälfte einen sich im Inneren der Werkzeughälfte und durch den Formbereich hindurcherstreckenden Beförderungskanal. Zudem umfasst die Werkzeughälfte einen zum Zuführen des Einlegeteils in die Werkzeughälfte ausgelegten Zuführkanal, der sich in vertikaler Richtung durch die Werkzeughälfte erstreckt und in einen Aufnahmebereich des Beförderungskanals mündet. Des Weiteren weist die Werkzeughälfte eine Positioniereinheit auf, die dazu ausgelegt ist, durch eine Bewegung von einer Entformposition in eine Spritzposition das Einlegeteil aufzunehmen, wenn dieses im Aufnahmebereich des Beförderungskanals angeordnet ist, und das aufgenommene Einlegeteil vom Aufnahmebereich bis zu einer Spritzgussposition im Bereich des Formbereichs zu befördern. Des Weiteren weist die Werkzeughälfte eine Sensorik auf, welche dazu ausgelegt ist, eine Position des Einlegeteils und/oder der Positioniereinheit zu ermitteln und entsprechende Positionssignale an eine Steuerung der Werkzeughälfte zu übermitteln, welche dazu eingerichtet ist, in Abhängigkeit von den Sensorsignalen die Positioniereinheit zum Befördern des Einlegeteils in die Spritzgussposition anzusteuern.

Die erfindungsgemäße Werkzeughälfte umfasst also eine Art integrierte Zuführmechanik, um wenigstens ein Einlegeteil im Bereich einer Kavität im Bereich einer vorgegebenen Spritzgussposition anzuordnen, sodass das Einlegeteil durch Schließen eines Spritzgusswerkzeugs, welches die erfindungsgemäße Werkzeughälfte umfasst, umspritzen kann. Durch den Zuführkanal ist es möglich, das Einlegeteil ins Innere der Werkzeughälfte zuzuführen. Dadurch, dass sich der Zuführkanal in vertikaler Richtung durch die Werkzeughälfte erstreckt, sind keine Fördermittel oder dergleichen erforderlich, um das Einlegeteil im Inneren der Werkzeughälfte bis zum Beförderungskanal fortzubewegen. Der Zuführkanal kann auch schräg verlaufen, muss also nicht rein in vertikaler Richtung verlaufen. Wesentlich beim Zuführkanal ist, dass dieser so verläuft, dass das Einlegeteil rein schwerkraftbedingt durch den Zuführkanal zum Aufnahmebereich des Beförderungskanals gelangen kann.

Mittels der Positioniereinheit ist es möglich, das im Aufnahmebereich angeordnete Einlegeteil bis zur Spritzgussposition im Bereich des Formbereichs, also im Bereich der Kavität, zu befördern. Dafür kann die Positioniereinheit zwischen der besagten Entformposition und der besagten Spritzgussposition insbesondere translatorisch hin und her bewegt werden. Die Positioniereinheit ist dabei so gestaltet, dass sie das Einlegeteil ergreifen beziehungsweise aufnehmen kann, wenn das Einlegeteil im Aufnahmebereich des Beförderungskanals angeordnet ist. Nachdem das Einlegeteil im Aufnahmebereich des Beförderungskanals angekommen ist, muss die Positioniereinheit also nur von ihrer Entformposition in ihre Spritzposition bewegt werden, in Folge dessen die Positioniereinheit unter anderem auch den Aufnahmebereich des Beförderungskanals passiert, wo die Positioniereinheit das Einlegeteil aufnimmt und durch weitere Fortbewegung bis zur Spritzposition das aufgenommene Einlegeteil in seine Spritzgussposition im Bereich des Formbereichs befördern kann.

Bei der erfindungsgemäßen Werkzeughälfte ist es also nicht mehr erforderlich, eine kostenintensive Peripherie vorzusehen, um das Einlegeteil in seiner Spritzgussposition im Bereich des Formbereichs anzuordnen. Durch die Integration der Positioniereinheit in die Werkzeughälfte ergibt sich eine besonders platzsparende Zuführmechanik, mittels welcher das Einlegeteil im Inneren der Werkzeughälfte bis zur Spritzgussposition im Bereich des Formbereichs befördert werden kann. Bei der erfindungsgemäßen Werkzeughälfte ist es mit sehr kurzen Zykluszeiten möglich, das besagte Spritzgussteil mit dem integrierten Einlegeteil herzustellen.

Zudem ist es mittels der erfindungsgemäßen Werkzeughälfte auch möglich, Spritzgussteile herzustellen, bei welchen das Einlegeteil nicht mit umspritzt wird, also nicht im Bereich der Kavität angeordnet wird. Die Positioniereinheit kann beispielsweise so gestaltet sein, dass mittels dieser der Formbereich bei Bedarf - also, wenn kein Einlegeteil mit umspritzt werden soll - dicht abgeschlossen werden kann. So ist es möglich, mittels der Werkzeughälfte auch Spritzgussteile herzustellen, bei denen kein Einlegeteil mit umspritzt werden soll.

Durch die integrierte Positioniereinheit ist es darüber hinaus möglich, derartige Einlegeteile besonders zuverlässig immer wieder passgenau an der besagten Spritzgussposition im Bereich des Formbereichs zu positionieren. Es sind beispielsweise keine Handlingroboter oder dergleichen notwendig, um das Einlegeteil in der Spritzgussposition im Bereich des Formbereichs anzuordnen.

Durch die zur Werkzeughälfte gehörende Sensorik ist es möglich, die Position des Einlegeteils und/oder der Positioniereinheit fortlaufend zu ermitteln und entsprechende Positionssignale an die Steuerung der Werkzeughälfte zu übertragen. Die Steuerung ist dazu eingerichtet, insbesondere unter Berücksichtigung dieser Positionssignale die Positioniereinheit zum Befördern des Einlegeteils in die Spritzgussposition anzusteuern. Eine Steuerung und Überwachung sämtlicher Funktionen der Werkzeughälfte kann also von der Werkzeughälfte selbst übernommen werden.

Zudem ist es möglich, eine Bestückung mit einer Vielzahl solcher Einlegeteile zum Beispiel während Nebenzeiten der Spritzgussmaschine vorzunehmen. Eine Zuführung und Bereitstellung der Einlegeteile kann auf unterschiedlichste Arten erfolgen. Durch die zur Werkzeughälfte gehörende Sensorik und Steuerung ergibt sich sehr flexible Einsatzmöglichkeiten der Werkzeughälfte auf verschiedenen Spritzgussmaschinen. Zudem ergibt sich eine verkürzte Zeit für die Industrialisierung der jeweiligen Peripherie der Spritzgussmaschinen, bei welchen die erfindungsgemäße Werkzeughälfte eingesetzt wird. Insbesondere bietet die Werkzeughälfte auch eine besonders wirtschaftliche Lösung für kleine Stückzahlen, da die Positionierung der entsprechenden Einlegeteile durch die in die Werkzeughälfte integrierte Funktionalität, also insbesondere durch die Positioniereinheit, vorgenommen werden kann.

Im Prinzip kann es sich bei den Einlegeteilen um beliebige Arten von Einlegeteilen handeln. So kann es sich beispielsweise um Schrauben, Bolzen, Stifte, Passstifte, Buchsen, Bundbuchsen, Gewindebuchsen oder auch beispielsweise um Membranchips handeln. Je nach Form der betreffenden Einlegeteile kann die Positioniereinheit im Hinblick auf ihre eigene Formgebung so angepasst sein, dass diese die jeweiligen unterschiedlichen Arten von Einlegeteilen im Aufnahmebereich des Beförderungskanals der Werkzeughälfte aufnehmen und zur Spritzgussposition im Bereich des Formbereichs befördern kann.

Eine mögliche Ausgestaltung der Erfindung sieht vor, dass die Steuerung dazu eingerichtet ist, die Spritzgussmaschine zum Herstellen des Spritzgussteils anzusteuern, wenn sich das Einlegeteil in der Spritzgussposition befindet, in Folge dessen ein die Werkzeughälfte umfassendes Spritzgusswerkzeug der Spritzgussmaschine geschlossen, ein Kunststoff in die Kavität gespritzt und das in der Spritzgussposition angeordnete Einlegeteil unter Ausbildung des Spritzgussteils vom Kunststoff umspritzt wird. Die Steuerung der Werkzeughälfte kann also selbst die Spritzgussmaschine ansteuern, in beziehungsweise an welcher die Werkzeughälfte montiert ist. Die Steuerung kann insbesondere die gesamte Prozesssteuerung der Spritzgussmaschine übernehmen. Die Steuerung der Werkzeughälfte kann dafür eine Schnittstelle aufweisen, welche dazu ausgelegt ist, verschiedenste Signale mit der Spritzgussmaschine auszutauschen. Dadurch, dass die Steuerung der Werkzeughälfte die Spritzgussmaschine ansteuern kann, müssen die Positionssignale der zur Werkzeughälfte gehörenden Sensorik auch nur von der Steuerung der Werkzeughälfte verarbeitet und interpretiert werden. Darüber hinaus ergibt sich dadurch der Vorteil, dass die Werkzeughälfte universell bei verschiedensten Spritzgussmaschinen einsetzbar ist, ohne dass die betreffende Spritzgussmaschine steuerungstechnisch umgerüstet beziehungsweise verändert werden muss. Denn die Steuerung der Werkzeughälfte kann wie gesagt die Steuerung sämtlicher Funktionen der Spritzgussmaschine bei Bedarf selbst übernehmen. Die Werkzeughälfte kann dadurch besonders variabel bei verschiedensten Spritzgussmaschinen eingesetzt werden.

Eine weitere mögliche Ausgestaltung der Erfindung sieht vor, dass die Steuerung der Werkzeughälfte dazu ausgelegt ist, eine Zuführperipherie zum Zuführen der Einlegeteile anzusteuern, welche dazu ausgelegt ist, eine Vielzahl der Einlegeteile zu vereinzeln und pneumatisch über einen Schlauch zumindest mittelbar zum Zuführkanal zu befördern. Die Zuführperipherie kann beispielsweise eine Rütteltopf oder auch eine anderweitige Vereinzelungsstation aufweisen, die mit dem Schlauch verbunden ist, mittels welchem pneumatisch die vereinzelten Einlegeteile der Werkzeughälfte zugeführt werden können. Die Zuführperipherie selbst braucht also keine aufwendige Steuerung, da die Steuerung der Werkzeughälfte die Ansteuerung der Zuführperipherie vornehmen kann. Dadurch kann zudem sichergestellt werden, dass die Vereinzelung und Zuführung der Einlegeteile bedarfsgerecht zur Werkzeughälfte erfolgen kann. Eine andere Zuführung als über eine Pneumatik und den Schlauch ist auch möglich.

Gemäß einer weiteren möglichen Ausgestaltung der Erfindung ist es vorgesehen, dass die Werkzeughälfte ein am Zuführkanal montierbares Magazin zum Aufnehmen mehrerer der Einlegeteile aufweist, welches dazu ausgelegt ist, die Einlegeteile zu vereinzeln und dem Zuführkanal zuzuführen, wobei die Steuerung der Werkzeughälfte dazu ausgelegt ist, das Magazin zum Zuführen der jeweiligen Einlegeteile anzusteuern. Bei dem Magazin kann es sich beispielsweise um ein Trommelmagazin, ein Stangenmagazin oder dergleichen handeln. Insbesondere kann das Magazin eine Schnittstelle zum Anschließen des besagten Schlauchs der Zuführperipherie aufweisen. So kann einerseits das Magazin eine Vielzahl der Einlegeteile bevorraten und dem Zuführkanal vereinzelt bereitstellen, wobei zum anderen über die Zuführperipherie bei Bedarf das Magazin auch immer wieder automatisch aufgefüllt werden kann. Die Sensorik der Werkzeughälfte kann dazu ausgelegt sein, einen Füllstand des Magazins bezüglich der Einlegeteile zu erfassen. Sollte der Füllstand einen vorgegebenen Minimalstand unterschreiten, so kann die Sensorik beispielsweise die Zuführperipherie ansteuern, um das Magazin automatisch wieder mit weiteren Einlegeteilen zu befüllen. Das Magazin selbst kann eine integrierte Vereinzelungseinrichtung aufweisen, welche dazu ausgelegt ist, die im Magazin bevorrateten Einzelteile einzeln dem Zuführkanal der Werkzeughälfte zuzuführen. Die Steuerung kann wiederum diese Vereinzelungseinheit ansteuern.

Eine weitere mögliche Ausgestaltung der Erfindung sieht vor, dass die Werkzeughälfte einen Kernzug zum Bewegen der Positioniereinheit zwischen der Entformposition und der Spritzposition aufweist. Die Werkzeughälfte selbst kann einen Antrieb aufweisen, um den Kernzug zu bewegen. Alternativ oder zusätzlich ist es auch möglich, dass der Kernzug über einen entsprechenden Antrieb der zugehörigen Spritzgussmaschine betätig beziehungsweise bewegt werden kann. Die Steuerung der Werkzeughälfte ist insbesondere dazu ausgelegt, den Kernzug zum Bewegen der Positioniereinheit anzusteuern. Dies kann unabhängig davon erfolgen, ob eine entsprechende Aktuatorik zum Bewegen des Kernzugs Teil der Werkzeughälfte oder Teil der betreffenden Spritzgussmaschine ist.

Gemäß einer weiteren möglichen Ausgestaltung der Erfindung ist es vorgesehen, dass die Sensorik dazu ausgelegt ist, jeweilige Endlagen des Kernzugs zu erfassen. Die Sensorik kann beispielsweise Endlagenschalter oder dergleichen aufweisen, welche dazu in der Lage sind, die jeweiligen Endlagen des Kernzugs zu erfassen, bei welchen es sich beispielsweise um jeweilige Lagen handeln kann, welche in der Entformposition beziehungsweise der Spritzgussposition der Positioniereinheit resultieren. So kann die Sensorik auf besonders einfache Weise erkennen und überwachen, ob sich die Positioniereinheit in ihrer Entformposition oder in ihrer Spritzposition befindet. Die Sensorik kann auch dazu ausgelegt sein, fortlaufend eine jeweilige Lage des Kernzugs zu erfassen und der Steuerung der Werkzeughälfte mitzuteilen.

In weiterer möglicher Ausgestaltung der Erfindung ist es vorgesehen, dass die Positioniereinheit eine stiftförmige Aufnahmeeinheit aufweist, die dazu ausgelegt ist, in eine Öffnung des im Aufnahmebereich angeordneten Einlegeteils einzudringen und es dadurch aufzunehmen. Dies ist insbesondere dann vorteilhaft, wenn es sich bei dem Einlegeteil beispielsweise um eine Buchse, Bundbuchse, Mutter oder Ähnliches handelt. Mittels der stiftförmigen Aufnahmeeinheit ist es so möglich, derartige Einlegeteile ganz einfach aufzunehmen, in dem die stiftförmige Aufnahmeeinheit in die Öffnung des im Aufnahmebereich angeordneten Einlegeteils bewegt wird.

Eine alternative mögliche Ausgestaltung der Erfindung sieht vor, dass die Positioniereinheit eine hülsenartige Aufnahmeeinheit aufweist, die dazu ausgelegt ist, einen Schaft des im Aufnahmebereich angeordneten Einlegeteils zu umschließen und es dadurch aufzunehmen. In dem Fall kann es sich bei dem Einlegeteil beispielsweise um eine Schraube, einen Bolzen, einen Stift, einen Passstift handeln. In derartigen Fällen kann die hülsenartige Aufnahmeeinheit ganz einfach besagten Schaft des im Aufnahmebereich angeordneten Einlegeteils umschließen und das Einlegeteil dadurch zuverlässig aufnehmen und weiter zur Spritzgussposition befördern. Bei der Werkzeughälfte beziehungsweise der Positioniereinheit kann es auch vorgesehen sein, dass mehrere unterschiedliche Aufnahmeeinheiten wie bei einem Baukastensystem vorgesehen sind, sodass je nach Art des Einlegeteils die passende Aufnahmeeinheit verwendet werden kann.

Eine weitere mögliche Ausgestaltung der Erfindung sieht vor, dass die Werkzeughälfte eine Fixiereinheit aufweist, die dazu ausgelegt ist, das im Aufnahmebereich angeordnete Einlegeteil solange zu fixieren, bis die Positioniereinheit das Einlegeteil aufgenommen hat. Die Fixiereinheit kann dafür im Bereich beziehungsweise in der Nähe des Aufnahmebereichs angeordnet sein. Über die in die Werkzeughälfte integrierte Sensorik kann ermittelt werden, ob und wann das Einlegeteil in den Aufnahmebereich gelangt ist. Die Steuerung der Werkzeughälfte kann beispielsweise die Fixiereinheit ansteuern, um das im Aufnahmebereich angeordnete Einlegeteil solange zu fixieren, bis die Positioniereinheit das Einlegeteil aufgenommen hat. Auch ist es möglich, dass die Fixiereinheit beispielsweise rein federbelastet betrieben wird, wobei durch eine Relativbewegung der Positioniereinheit zur Fixiereinheit zunächst die Fixierung des Einlegeteils und danach die Übergabe des Einlegeteils an die Positioniereinheit bewerkstelligt werden kann. Durch die Fixiereinheit kann zuverlässig sichergestellt werden, dass das Einlegeteil im Aufnahmebereich problemlos und somit zuverlässig von der Positioniereinheit aufgenommen und danach erst weiterbefördert werden kann.

Gemäß einer weiteren möglichen Ausgestaltung der Erfindung ist es vorgesehen, dass die Werkzeughälfte eine Verriegelungseinheit aufweist, welche dazu ausgelegt ist, die Positioniereinheit in ihrer Spritzposition zu verriegeln, in der das mittels der Positioniereinheit aufgenommene Einlegeteil in der Spritzgussposition angeordnet ist. Beispielsweise kann die Verriegelungseinheit Klauen oder dergleichen aufweisen, die an die Positioniereinheit herangefahren werden können, um diese in ihrer Spritzposition zu verriegeln. Auch kann es beispielsweise sein, dass der besagte Kernzug einfach hydraulisch verriegelt werden kann, wenn sich die Positioniereinheit in ihrer Spritzposition befindet. Grundsätzlich sind verschiedenste Mechanismen für die Verriegelungseinheit möglich, um die Positioniereinheit in ihrer Spritzposition zu verriegeln und somit sicherzustellen, dass die Positioniereinheit während des Spritzgussvorgangs nicht durch die dabei auftretenden relativ hohen Drücke bewegt wird. Dadurch kann sichergestellt werden, dass das Einlegeteil während des Spritzgussvorgangs auch zuverlässig in seiner Spritzgussposition verbleibt und wie vorgesehen von dem Kunststoff umspritzt und zuverlässig im Spritzgussteil verankert wird.

Bei dem erfindungsgemäßen Verfahren zum Herstellen eines Spritzgussteils mit wenigstens einem Einlegeteil wird die erfindungsgemäße Werkzeughälfte oder eine mögliche Ausgestaltung der erfindungsgemäßen Werkzeughälfte verwendet, wobei das Einlegeteil in den Zuführkanal zugeführt wird, wonach das Einlegeteil schwerkraftbedingt in den Aufnahmebereich des Beförderungskanals der Werkzeughälfte gelangt. Danach wird die Positioniereinheit von der Entformposition bis zur Spritzposition bewegt, in Folge dessen die Positioniereinheit das im Aufnahmebereich angeordnete Einlegeteil aufnimmt und danach bis zur Spritzgussposition im Bereich des Formbereichs befördert. Anschließend wird eine Spritzgussmaschine zum Herstellen des Spritzgussteils mittels der Steuerung der Werkzeughälfte so angesteuert, dass ein die Werkzeughälfte umfassendes Spritzgusswerkzeug der Spritzgussmaschine geschlossen, ein Kunststoff in die Kavität gespritzt und das in der Spritzgussposition angeordnete Einlegeteil unter Ausbildung des Spritzgussteils vom Kunststoff umspritzt wird. Die beschriebenen möglichen Ausgestaltungen der Werkzeughälfte sind als mögliche Ausgestaltungen des erfindungsgemäßen Verfahrens und umgekehrt anzusehen, wobei insbesondere die Werkzeughälfte Mittel zur Durchführung der Verfahrensschritte aufweist.

Eine mögliche Ausgestaltung des erfindungsgemäßen Verfahrens sieht vor, dass die Steuerung eine Zuführperipherie und/oder ein an der Werkzeughälfte angebrachtes Magazin derart ansteuert, dass das Einlegeteil vereinzelt und dem Zuführkanal zugeführt wird. Die bereits im Zusammenhang mit der Zuführperipherie beziehungsweise dem Magazin erläuterten Dinge gelten auch für diese mögliche verfahrensmäßige Vorgehensweise. So kann der Füllstand des Magazins beispielsweise mittels der in die Werkzeughälfte integrierten Sensorik abgefragt und der Steuerung der Werkzeughälfte übermittelt werden. Sollte der Füllstand im Magazin unzureichend sein, so werden durch entsprechende Ansteuerung mittels der Steuerung weitere Einlegeteile über die Zuführperipherie bereitgestellt. Sämtliche dafür notwendigen Aufgaben der Zuführperipherie werden also über die Steuerung der Werkzeughälfte abgearbeitet.

Eine weitere mögliche Ausgestaltung des Verfahrens sieht vor, dass die Sensorik das Zuführen des Einlegeteils und/oder die Anordnung des Einlegeteils im Aufnahmebereich des Beförderungskanals überwacht sowie entsprechende Sensorsignale an die Steuerung übermittelt. Die Steuerung kann also jederzeit anhand der Sensorsignale erkennen, ob das Einlegeteil gerade in der gewünschten Weise zugeführt wird beziehungsweise insbesondere korrekt im Aufnahmebereich des Beförderungskanals angeordnet worden ist. In Kenntnis dieser Information kann die Steuerung die Herstellung des Spritzgusswerkzeugs und insbesondere die korrekte Positionierung des Einlegeteils in seiner Spritzgussposition jederzeit zuverlässig steuern. Insbesondere ist es in Kenntnis der Sensorsignale für die Steuerung möglich, den Spritzgussprozess beziehungsweise die Zuführung des Einlegeteils jederzeit zu unterbrechen.

Gemäß einer weiteren möglichen Ausgestaltung des Verfahrens ist es vorgesehen, dass di Steuerung zum Befördern des Einlegeteils in die Spritzgussposition eine Bewegung der Positioniereinheit von der Entformposition zur Spritzposition initiiert, nachdem erfasst wurde, dass das Einlegeteil in den Aufnahmebereich gelangt ist. Dies kann sowohl bei geöffnetem als auch bei geschlossenem Spritzgusswerkzeug erfolgen. Dafür kann es beispielsweise vorgesehen sein, dass die in die Werkzeughälfte integrierte Sensorik jeweilige Endlagen des Kernzugs abfragt und an die Steuerung übermittelt. Dadurch kann die Steuerung auf zuverlässige Weise erkennen, wo sich die Positioniereinheit gerade befindet. Zudem ist es über die Sensorik möglich, zuverlässig zu ermitteln, ob sich das betreffende Einlegeteil auch im Aufnahmebereich befindet. In Kenntnis dieser Informationen kann die Steuerung die Beförderung des Einlegeteils in die Spritzgussposition steuern, indem es die entsprechende Bewegung der Positioniereinheit von der Entformposition zur Spritzposition initiiert.

Schließlich sieht eine weitere mögliche Ausgestaltung des Verfahrens vor, dass die Steuerung eine Bewegung der Positioniereinheit während einer Abkühlzeit des Spritzgussteils von der Spritzposition zur Entformposition initiiert, nachdem der Spritzgussvorgang beendet wurde. Die Positioniereinheit kann also während der Abkühlzeit beispielsweise mittels des besagten Kernzugs innerhalb der Werkzeughälfte wieder in die Entformposition verbracht werden. Dadurch ist es unter anderem möglich, Taktzeit bei der Herstellung der Spritzgussteile einzusparen. Es ist möglich, dass beispielsweise ein Signal an die Steuerung übermittelt wird, sobald der besagte Kernzug seine Endlage erreicht hat, beziehungsweise wenn die Positioniereinheit ihre Entformposition erreicht hat. Danach kann beispielsweise das besagte Magazin mittels der Steuerung angesteuert werden, um ein weiteres Einlegeteil bereitzustellen. Nach einer entsprechend vorgegebenen Abkühlzeit, unter anderem beispielsweise abhängig von der Verarbeitung und des zu verwendenden Kunststoffes, kann die Spritzgussmaschine beziehungsweise das Spritzgusswerkzeug geöffnet und in seine Entformposition verbracht werden. Ein Linearhandling oder ein Roboter kann sich - beispielsweise ebenfalls initiiert durch die Steuerung der Werkzeughälfte - in das geöffnete Spritzgusswerkzeug bewegen und das fertiggestellte Spritzgussteil entnehmen, welches beispielsweise mittels eines Auswerfers des Spritzgusswerkzeugs aus diesem entformt wird. Das fertiggestellte Spritzgussteil kann aber auch ohne Linearhandling oder Roboter entformt beziehungsweise entnommen werden, wobei in dem Fall das fertige Spritzgussteil beispielsweise rein schwerkraftbedingt auf ein Förderband fallen kann. Nachdem das Spritzgussteil aus dem Spritzgusswerkzeug entfernt wurde, kann die Sensorik der Werkzeughälfte beispielsweise ein entsprechendes Signal an die Steuerung übertragen, dass ein nächster Zyklus zur Herstellung eines weiteren Spritzgussteils begonnen werden kann. Das nächste bereitgestellte Einlegeteil kann dann in der bereits beschriebenen Weise wieder in die Spritzgussposition befördert werden, was wiederum bei geöffnetem oder geschlossenem Spritzgusswerkzeug erfolgen kann. Sobald ein Signal während eines Programmablaufs, also während der Positionierung des Einlegeteils und während des Spritzgussvorgangs signalisiert, dass etwas nicht in Ordnung ist, kann die automatische Zuführung, Positionierung und Umspritzung des Einlegeteils durch die Steuerung unterbrochen werden.

Weitere Vorteile, Merkmale und Einzelheiten der Erfindung können sich aus der nachfolgenden Beschreibung möglicher Ausführungsbeispiele sowie anhand der Zeichnung ergeben.

### Kurze Figurenbeschreibung

Die Zeichnung zeigt in:
- Fig. 1: eine schematische Draufsicht auf eine Spritzgussmaschine, die zwei Werkzeughälften aufweist, mittels welchen ein Spritzgussteil mit wenigstens einem Einlegeteil hergestellt werden kann, wobei eine der beiden Werkzeughälften eine Art integrierten Zuführmechanismus zum Zuführen des Einlegeteils in einer Spritzgussposition aufweist;
- Fig. 2: eine Perspektivansicht der Werkzeughälfte mit dem integrierten Zuführmechanismus, wobei oberseitig an der Werkzeughälfte ein Magazin zum Bereitstellen und Vereinzeln einer Vielzahl der Einlegeteile angebracht ist;
- Fig. 3: eine Detailansicht eines oberen Bereichs des Magazins, an welchem ein Schlauch zum Zuführen der Einlegeteile angeschlossen ist;
- Fig. 4: eine Detailansicht eines mittleren Bereichs des Magazins, wobei mittels einer Vereinzelungsvorrichtung die bevorrateten Einlegeteile vereinzelt werden;
- Fig. 5: eine seitliche Schnittansicht der beiden Werkzeughälften im geschlossenen Zustand, wobei sich im Inneren der einen Werkzeughälfte eine Positioniereinheit befindet, welche dazu dient, die Einlegeteile im Bereich eines Formeinsatzes dieses Werkzeugs zu positionieren;
- Fig. 6: eine Detailansicht eines vorderen Teils einer möglichen Ausgestaltung der Positioniereinheit, mittels welcher gerade ein Einlegeteil aufgenommen wird;
- Fig. 7: eine teilweise geschnittene Perspektivansicht der Werkzeughälfte, wobei ein Spritzgussvorgang dargestellt ist, bei welchem das in der Spritzgussposition angeordnete Einlegeteil unter Ausbildung des Spritzgussteils mit einem Kunststoff umspritzt wird.

In den Figuren sind gleiche oder funktionsgleiche Elemente mit den gleichen Bezugszeichen versehen worden.

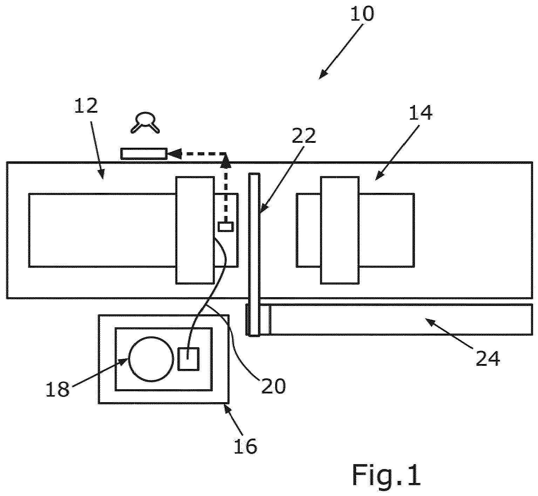

Eine Spritzgussmaschine 10 ist in einer schematischen Draufsicht in Fig. 1 gezeigt. Die Spritzgussmaschine 10 umfasst zwei Werkzeughälften 12, 14, mittels welchen ein Spritzgussteil mit einem umspritzten Einlegeteil hergestellt werden kann. Die gemäß der vorliegenden Darstellung linke Werkzeughälfte 12 umfasst eine Art integrierte Zuführmechanik, mittels welcher die Einlegeteile in den Bereich einer Kavität der beiden Werkzeughälften 12, 14 befördert werden kann. Zur Spritzgussmaschine 10 kann noch eine Zuführperipherie 16 gehören, welche einen Rütteltopf 18 zum Bevorraten und Vereinzeln der bolzenartigen Einlegeteile aufweisen kann. Die Zuführperipherie 16 kann zudem einen Schlauch 20 aufweisen, mittels welchem beispielsweise pneumatisch die vereinzelten Einlegeteile der Werkzeughälfte 12 zugeführt werden können. Die gesamte Zuführperipherie 16 kann mobil ausgestaltet sein, kann also bei Bedarf an unterschiedlichen Spritzgussmaschinen 10 bereitgestellt werden. Die Spritzgussmaschine 10 kann darüber hinaus über ein Linearhandling 22 beziehungsweise einen Roboter verfügen, mittels welchem die hergestellten Spritzgussteile aus den geöffneten Werkzeughälften 12, 14 entnommen und zum Beispiel auf einem Förderband 24 abgelegt werden können.

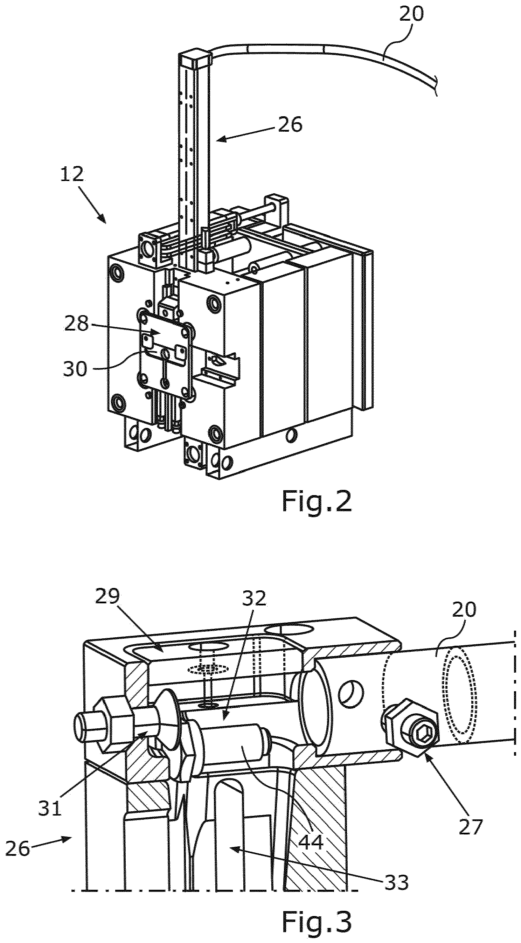

In Fig. 2 ist die Werkzeughälfte 12 in einer Perspektivansicht gezeigt. Oberseitig an der Werkzeughälfte 12 ist ein Magazin 26 angeschlossen, das über den bereits erwähnten Schlauch 20 mit den Einlegeteilen versorgt werden kann. Die Zuführung der Einlegeteile mittels des Schlauchs 20 ist insbesondere dann von Vorteil, wenn sehr viele Spritzgussteile hergestellt werden, also fortlaufend die Einlegeteile benötigt werden. Über den Schlauch 20 kann das Magazin 26 automatisch mit den Einlegeteilen befüllt werden. Bei geringeren Stückzahlen kann auch das Magazin 26 ohne Schlauch 20 betrieben werden. In dem Fall kann das Magazin 26 beispielsweise während Stillstandszeiten mit den Einlegeteilen befüllt werden.

Bei den Einlegeteilen kann es sich beispielsweise um Schrauben, Bolzen, Passstifte, Buchsen, Bundbuchsen, Gewindebuchsen, Muttern, Membranchips oder dergleichen handeln. Grundsätzlich kann es sich bei den Einlegeteilen um beliebige Bauteile handeln, die im Zuge eines Spritzgussvorgangs mit Kunststoff umspritzt werden können. Durch das Magazin 26 können die Einlegeteile ins Innere der Werkzeughälfte 12 gelangen und von dort aus im Bereich eines Formeinsatzes 28, der zumindest einen Teil einer Kavität 30 für das Spritzgussteil bildet, angeordnet werden. Der Schlauch 20 ist mittels einer Schlauchfixierung 27 befestigt. Oberhalb von einem nicht näher bezeichneten oberen Bereich, in den die jeweiligen Einlegeteile 32 zunächst über den Schlauch 20 gelangen können, ist eine Abdeckplatte 29 vorgesehen. Gegenüberliegend von einer Öffnung des Schlauchs 20, durch den die Einlegeteile 32 in den oberen Bereich unterhalb von der Abdeckplatte 29 gelangen, ist ein Abstimmstift 31 vorgesehen. Dieser kann in den oberen Bereich hinein- und auch aus diesem herausbewegt werden. Beispielsweise kann der Abstimmstift 31 über ein Gewinde in den oberen Bereich hineingedreht und aus diesem herausgedreht werden. Durch entsprechende Justierung des Abstimmstifts 31 kann sichergestellt werden, dass die jeweiligen Einlegeteile 32 passgenau oberhalb von einem Magazinschacht 33 angeordnet werden.

In Fig. 3 ist das Magazin 26 in einer teilweise geschnittenen Ansicht in einem oberen Bereich gezeigt. Vorliegend kann man erkennen, wie über den Schlauch 20 eines der Einlegeteile 32, vorliegend in Form einer Schraube, dem Magazin 26 zugeführt wird. Natürlich kann dies auch mit anders geformten Einlegeteilen funktionieren.

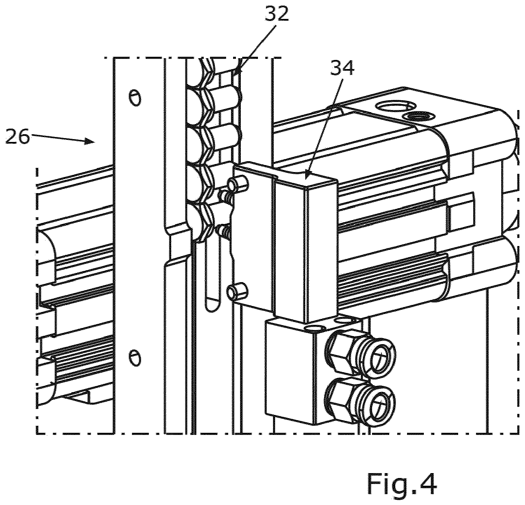

In Fig. 4 ist wiederum das Magazin 26, nun in einem weiter unten befindlichen Abschnitt, in einer Perspektivansicht gezeigt. Das Magazin 26 ist vorliegend teilweise geöffnet dargestellt, sodass der Blick aufs Innere des Magazins 26 freigegeben wird. Wie zu erkennen, sind in dem Magazin 26 in vertikaler Richtung übereinander mehrere der Einlegeteile 32 angeordnet. Zudem ist noch eine Vereinzelungsvorrichtung 34 zu erkennen, welche dazu dient, die im Magazin 26 aufgenommenen Einlegeteile 32 einzeln der Werkzeughälfte 12 zuzuführen. Die Vereinzelungsvorrichtung 34 kann beispielsweise pneumatisch angetrieben werden, sodass die Vereinzelungsvorrichtung 34 auf und ab bewegt werden kann, wobei diese dabei immer wieder eines der Einlegeteile 32 freigeben kann, sodass diese einzeln schwerkraftbedingt nach unten in Richtung der Werkzeughälfte 12 gelangen können.

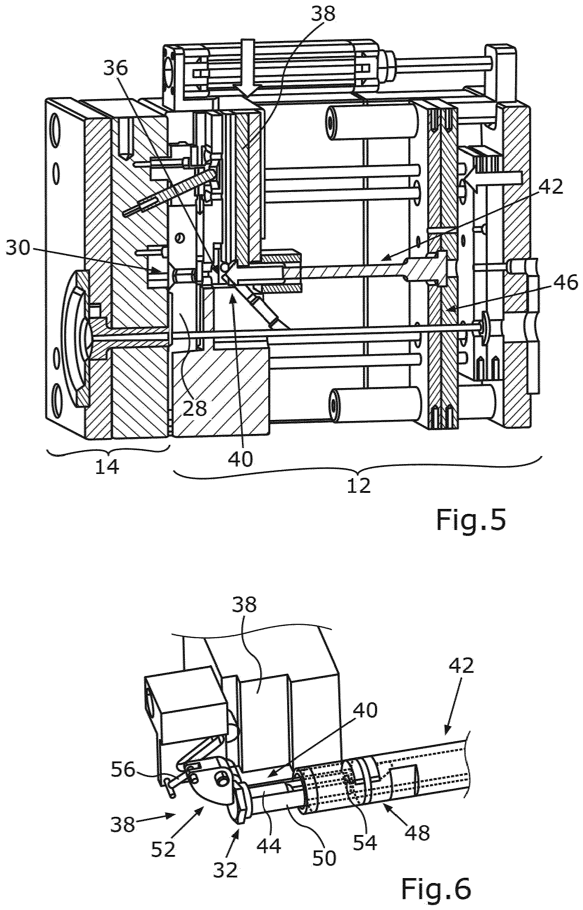

In Fig. 5 sind die beiden Werkzeughälften 12, 14 in einer Seitenschnittansicht im geschlossenen Zustand gezeigt. Die Werkzeughälfte 12 weist einen horizontal verlaufenden Beförderungskanal 36 auf, der sich im Inneren der Werkzeughälfte 12 und durch den Formeinsatz 28 hindurch erstreckt. Der Beförderungskanal 36 muss aber nicht unbedingt rein horizontal verlaufen.

Zum Zuführen der hier nicht dargestellten Einlegeteile 32 ins Innere der Werkzeughälfte 12 umfasst diese einen Zuführkanal 38, der sich in vertikaler Richtung durch die Werkzeughälfte 12 erstreckt und in einen Aufnahmebereich 40 des Beförderungskanals 36 mündet. Des Weiteren umfasst die Werkzeughälfte 12 eine Positioniereinheit 42, die dazu ausgelegt ist, durch eine Bewegung von einer hier gezeigten Entformposition in eine Spritzposition einen Schaft 44 (siehe Fig. 3) des betreffenden Einlegeteils 32 zu umschließen und dadurch das betreffende Einlegeteil 32 aufzunehmen, wenn dieses im Aufnahmebereich 40 des Beförderungskanals 36 angeordnet ist, und das aufgenommene Einlegeteil 32 vom Aufnahmebereich 40 bis zu einer Spritzgussposition im Bereich des Formeinsatzes 28 zu befördern.

Die mittels des Magazins 26 vorgehaltenen Einlegeteile 32 können also vereinzelt und somit einzeln dem sich vertikal erstreckenden Zuführkanal 38 zugeführt werden. Schwerkraftbedingt fallen die Einlegeteile 32 dann einzeln durch den Zuführkanal 38 in den Aufnahmebereich 40 des Beförderungskanals 36. Dort kann die Positioniereinheit 42 den Schaft 44 des betreffenden Einlegeteils 32 umschließen und dadurch das Einlegeteil 32 aufnehmen und dieses vom Aufnahmebereich 40 - gemäß der vorliegenden Darstellung - nach links durch den Formeinsatz 28 hindurch bis zu der besagten Spritzgussposition befördern. In dieser Spritzgussposition ragt das Einlegeteil 32 dann so weit in die Kavität der beiden Werkzeughälften 12, 14 hinein, dass im Zuge eines Spritzgussvorgangs das so positionierte Einlegeteil 32 mit Kunststoff umspritzt werden kann.

Abweichend von den Darstellungen in den Fig. 2 bis 4 ist es auch möglich, das Magazin 26 wegzulassen. In dem Fall kann der Schlauch 20 so an der Werkzeughälfte 12 angeschlossen werden, dass die Einlegeteile 32 z.B. über den Schlauch 20 im oberen Bereich des Zuführkanals 38 vereinzelt zugeführt werden, wiederum beispielsweise mittels Druckluft. Auch ist es möglich, die Zuführteile mittels des Schlauchs 20 direkt im Inneren der Werkzeughälfte 12 zuzuführen, beispielsweise in einem unteren Bereich des Zuführkanals 38 bzw. oberhalb vom Aufnahmebereich 40.

Die Werkzeughälfte 12 umfasst einen Kernzug 46 zum Bewegen der Positioniereinheit 42 zwischen der hier gezeigten Entformposition und der besagten Spritzposition, welche sich gemäß der vorliegenden Darstellung dann weiter links befindet. Der Kernzug 46 kann beispielsweise hydraulisch angetrieben werden, um diesen nach links und rechts zu bewegen, in Folge dessen die Positioniereinheit 42 entsprechend zwischen der hier gezeigten Entformposition und der weiter links befindlichen Spritzposition hin und her bewegt werden kann. Es sind verschiedenste Antriebskonzepte möglich, um den Kernzug 46 und somit die Positioniereinheit 42 zu bewegen.

In Fig. 6 ist ein vorderer Bereich der Positioniereinheit 42 in einer Detailansicht gezeigt, während mittels einer Positionierhülse 48 der Positioniereinheit 42 gerade das Einlegeteil 32 im Aufnahmebereich 40 des Beförderungskanals 36 aufgenommen wird. Innerhalb der Positionierhülse 48 ist darin verschieblich noch eine halbschalenförmige Aufnahmehülse 50 angeordnet, welche dazu dient, das Einlegeteil 32, insbesondere den besagten Schaft 44 aufzunehmen. In der Nähe des Aufnahmebereichs 40 ist zudem noch eine verschwenkbare Fixiereinheit 52 angeordnet, die dazu dient, das Einlegeteil 32 im Aufnahmebereich 40 so lange zu fixieren, bis das Einlegeteil 32 sicher mittels der Positionierhülse 48 aufgenommen wurde. Bei Bewegung der Positioniereinheit 42 nach links, also in Richtung ihrer Spritzposition, wird zunächst die Aufnahmehülse 50 in die Positionierhülse 48 hineingedrückt. Ein Magnet 54 kann dafür sorgen, dass das Einlegeteil 32 sicher innerhalb der Positionierhülse 48 verbleibt, wobei die Aufnahmehülse 50 dann in der Positionierhülse 48 versenkt ist. Wird dann die Positioniereinheit 42 weiter nach links bewegt, so wird die Fixiereinheit 52 aus ihrer hier gezeigten Fixierstellung nach oben geschwenkt, wobei eine Rückstellfeder 55 gelängt wird. Nach entsprechend weitem Herausschwenken der Fixiereinheit 52 aus dem Beförderungskanal 36 heraus, also gemäß der vorliegenden Darstellung nach oben, kann die Positioniereinheit 42 mit dem aufgenommenen Einlegeteil 32 den Aufnahmebereich 40 und insbesondere die Fixiereinheit 52 passieren. Bei entsprechend weitere Bewegung der Positioniereinheit 42 bis in ihre Spritzposition wird dann das aufgenommene Einlegeteil 32 in seiner Spritzgussposition angeordnet.

Die im Zusammenhang mit Fig. 6 beschriebene Ausgestaltung der Positioniereinheit 42 ist nur rein beispielhaft zu verstehen und bietet sich insbesondere dann an, wenn das Einlegeteil 32 ein schraubenförmiges Einlegeteil ist, insbesondere den besagten Schaft 44 aufweist, der mittels der Positioniereinheit 42 aufgenommen werden soll. Die Positioniereinheit 42 kann beispielsweise auch eine stiftförmige Aufnahmeeinheit aufweisen, die dazu ausgelegt sein kann, in eine Öffnung des im Aufnahmebereich angeordneten Einlegeteils 32 einzudringen und es dadurch aufzunehmen. Entgegen der vorliegenden Darstellung kann es sich bei dem Einlegeteil 32 beispielsweise auch um eine Buchse, Bundbuchse, Mutter oder ähnliches handeln.

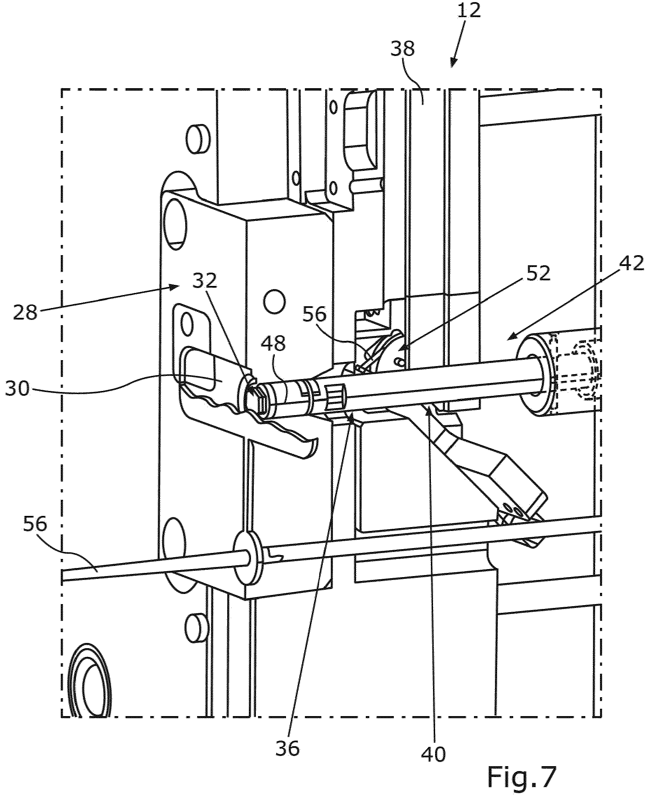

In Fig. 7 ist die Werkzeughälfte 12 in einer teilweise geschnittenen Perspektivansicht gezeigt. Das Einlegeteil 32 wurde gerade mittels der Positioniereinheit 42 in der Spritzgussposition angeordnet. Die beiden Werkzeughälften 12, 14, wobei letztere hier nicht zu sehen ist, wurden bereits geschlossen. Nach dem Schließen der Werkzeughälften 12, 14 wird die Kavität 30 des Formeinsatzes 28 mit einem Kunststoff 56 befüllt, in Folge dessen das in der Spritzgussposition angeordnete Einlegeteil 32 teilweise von dem Kunststoff 56 umspritzt wird. Dadurch wird das besagte Spritzgussteil mit dem integrierten Einlegeteil 32 hergestellt.

Zum Herstellen des Spritzgussteils mit dem wenigstens einen integrierten beziehungsweise umspritzten Einlegeteil 32 wird dieses also zunächst dem Zuführkanal 38 zugeführt, wonach das Einlegeteil 32 schwerkraftbedingt in den Aufnahmebereich 40 des Beförderungskanals 36 gelangt. Die Positioniereinheit 42 wird von ihrer Entformposition in ihre hier gezeigte Spritposition bewegt, in Folge dessen die Positioniereinheit 42 das im Aufnahmebereich 40 angeordnete Einlegeteil 32 aufnimmt und danach bis zur hier gezeigten Spritzgussposition im Bereich des Formeinsatzes 28 befördert, sodass ein Teil des Einlegeteils 32 in die Kavität 30 hineinragt.

Danach wird die Spritzgussmaschine 10 zum Herstellen des Spritzgussteils mittels einer Steuerung der Werkzeughälfte 12 so angesteuert, dass die beiden Werkzeughälften 12, 14 geschlossen werden, wonach der Kunststoff 56 in die Kavität 30 eingespritzt wird. Dabei wird das in der Spritzgussposition angeordnete Einlegeteil 32 unter Ausbildung des Spritzgussteils vom Kunststoff 56 umspritzt. Die Steuerung der Werkzeughälfte 12 kann dabei sowohl das Magazin 26 als auch die Zuführperipherie 16 zur rechtzeitigen Bereitstellung der Einlegeteile 32 ansteuern. So kann beispielsweise der Füllstand des Magazins 26 mittels einer in die Werkzeughälfte 12 integrierten Sensorik abgefragt und der Steuerung der Werkzeughälfte 12 übermittelt werden. Sollte der Füllstand im Magazin 26 unzureichend sein, werden von der Steuerung der Werkzeughälfte 12 weitere Einlegeteile 32 über die Zuführperipherie 16 bereitgestellt. Sämtliche dafür notwendigen Aufgaben der Zuführperipherie 16 können über die in die Werkzeughälfte 12 integrierte Steuerung abgearbeitet werden.

Die in die Werkzeughälfte 12 integrierte Sensorik kann auch das Zuführen des Einlegeteils 32 und/oder die Anordnung des Einlegeteils 32 im Aufnahmebereich 40 des Beförderungskanals 36 überwachen sowie entsprechende Sensorsignale an die Steuerung der Werkzeughälfte 12 übermitteln. Die Steuerung der Werkzeughälfte 12 kann zudem zum Befördern des Einlegeteils 32 in die hier gezeigte Spritzgussposition eine Bewegung der Positioniereinheit 42 von der Entformposition zur hier gezeigten Spritzposition initiieren, nachdem erfasst wurde, dass das Einlegeteil 32 in den Aufnahmebereich 40 gelangt ist. Durch entsprechende Bewegung der Positioniereinheit 42 durch den Aufnahmebereich 40 hindurch wird dann das dort positionierte Einlegeteil 32 aufgenommen und dann weiter bis in den Bereich der Kavität 30 in die Spritzgussposition befördert.

Die Werkzeughälfte 12 kann auch eine hier nicht dargestellte Verriegelungseinheit aufweisen, welche dazu ausgelegt ist, die Positioniereinheit 42 in ihrer hier gezeigten Spritzposition gegen den während des Spritzgussvorgangs auftretenden Druck zu verriegeln.

Beispielsweise kann ein Formschluss zwischen der Verriegelungseinheit und der Positioniereinheit 42 hergestellt werden, um diese in der hier gezeigten Position zu verriegeln. Die Verriegelungseinheit kann dafür beispielsweise Klauen aufweisen, die formschlüssig in die Positioniereinheit 42 eingreifen. Auch kann es sein, dass eine Hydraulik, welche dazu dient, den hier nicht erkennbaren Kernzug 46 zu betätigen, einfach verriegelt wird, um die Positioniereinheit 42 in ihrer hier gezeigten Position zu verriegeln. Anderweitige Mechanismen sind aber auch möglich, um die Positioniereinheit 42 in ihrer hier gezeigten Spritzposition gegen den Spritzdruck zu verriegeln.

Die Steuerung der Werkzeughälfte 12 kann eine Bewegung der Positioniereinheit 42 während einer Abkühlzeit des hergestellten Spritzgussteils von der hier gezeigten Spritzposition zur Entformposition initiieren, nachdem der Spritzgussvorgang beendet wurde. Sobald beispielsweise der Kernzug 46 eine Endlage erreicht hat, welche der Entformposition der Positioniereinheit 42 entsprechen kann, kann ein entsprechendes Signal an die Steuerung der Werkzeughälfte 12 übermittelt werden. Danach initiiert die Steuerung, dass das Magazin 26 ein weiteres Einlegeteil 32 dem Zuführkanal 38 bereitstellt. Nach einer definierten Abkühlzeit werden die beiden Werkzeughälften 12, 14 geöffnet, sodass das aus den beiden Werkzeughälften 12, 14 gebildete Spritzgusswerkzeug in seiner Entformposition steht.

Die Werkzeughälfte 12 kann die besagte Steuerung aufweisen, muss es aber nicht. Im Fall, dass die Werkzeughälfte 12 die Steuerung aufweist, ist nur eine Signalschnittstelle zwischen der Werkzeughälfte 12 und der Spritzgussmaschine 10 erforderlich. Oftmals weisen derartige Spritzgussmaschinen 10 bereits eine entsprechend geeignete Signalschnittstelle auf. Die Werkzeughälfte 12 ist somit nicht maschinengebunden und kann mit verschiedenen Spritzgussmaschinen 10 kombiniert und eingesetzt werden. Wenn die Werkzeughälfte 12 über besagte Steuerung verfügt, können die entsprechenden Spritzgussmaschinen 10 günstiger sein, da diese die Funktionalität der Steuerung der Werkzeughälfte nicht abdecken können müssen.

Ein weiterer Vorteil ist, dass die Möglichkeit besteht, eine Funktionsprüfung, z.B. nach einer Wartung, oder Tests durchführen zu können, ohne dass dafür die Spritzgussmaschine 10 benötigt wird. Dadurch, dass die Steuerung das gesamte Spritzgusswerkzeug und somit auch die Werkzeughälfte 12 überwachen kann, weiß man genau, wo und was es für ein Problem oder Fehler es gegebenenfalls gibt. Dadurch vereinfacht sich auch die Bedienung und Überwachung der Spritzgussmaschine.

Es ist aber auch möglich, dass die Werkzeughälfte 12 selbst keine eigene Steuerung aufweist. In dem Fall kann beispielsweise die Spritzgussmaschine 10 eine Steuerung aufweisen. Diese kann sowohl die Zuführung der Einlegeteile 32 in den Zuführkanal 38 als auch die Bewegung beziehungsweise Betätigung der Positioniereinheit 42 steuern.

Das im Zusammenhang mit Fig. 1 beschriebene Linearhandling 22 kann beispielsweise das fertighergestellte Spritzgussteil entnehmen, wobei das Spritzgussteil durch Auswerfer unterstützt aus dem Spritzgusswerkzeug entformt werden kann. Alternativ kann das fertighergestellte Spritzgussteil auch beispielsweise ohne das Linearhandling 22 entformt beziehungsweise entnommen werden, wobei das fertighergestellte Spritzgussteil dann zum Beispiel auf das in Zusammenhang mit Fig. 1 beschriebene Förderband 24 fallen kann. Sobald das hergestellte Spritzgussteil aus den Werkzeughälften 12, 14 entnommen wurde, wird ein entsprechendes Signal an die Steuerung der Werkzeughälfte 12 übermittelt, wobei diese dann erneut die Positionierung des nächsten Einlegeteils 32 in die Spritzgussposition initiiert und anschließend eine Herstellung eines weiteren Spritzgussteils in der bereits beschriebenen Weise durchführt.

### BEZUGSZEICHENLISTE

- 10: Spritzgussmaschine
- 12: Werkzeughälfte
- 14: Werkzeughälfte
- 16: Zuführperipherie
- 18: Rütteltopf
- 20: Schlauch
- 22: Linearhandling
- 24: Förderband
- 26: Magazin
- 27: Schlauchfixierung
- 28: Formeinsatz
- 29: Abdeckplatte
- 30: Kavität
- 31: Abstimmstift
- 32: bolzenförmiges Einlegeteil
- 33: Magazinschacht
- 34: Vereinzelungsvorrichtung
- 36: Beförderungskanal
- 38: Zuführkanal
- 40: Aufnahmebereich des Beförderungskanals
- 42: Positioniereinheit
- 44: Schaft des Einlegeteils
- 46: Kernzug
- 48: Positionierhülse
- 50: Aufnahmehülse
- 52: Fixiereinheit
- 54: Magnet
- 55: Rückstellfeder
- 56: Kunststoff

## Patentansprüche

1. Werkzeughälfte (12) für eine Spritzgussmaschine (10) zum Herstellen eines Spritzgussteils mit wenigstens einem Einlegeteil (32), umfassend
- einen Formbereich (28), der zumindest einen Teil einer Kavität (30) für das Spritzgussteil bildet;
- einen sich im Inneren der Werkzeughälfte (12) und durch den Formbereich (28) hindurch erstreckenden Beförderungskanal (36);
- einen zum Zuführen des Einlegeteils (32) in die Werkzeughälfte (12) ausgelegten Zuführkanal (38), der sich in vertikaler Richtung durch die Werkzeughälfte (12) erstreckt und in einen Aufnahmebereich (40) des Beförderungskanals (36) mündet;
- eine Positioniereinheit (42), die dazu ausgelegt ist, durch eine Bewegung von einer Entformposition in eine Spritzposition das Einlegeteil (32) aufzunehmen, wenn dieses im Aufnahmebereich (40) des Beförderungskanals (36) angeordnet ist, und das aufgenommene Einlegeteil (32) vom Aufnahmebereich (40) bis zu einer Spritzgussposition im Bereich des Formbereichs (28) zu befördern;
- eine Sensorik, welche dazu ausgelegt ist, eine Position des Einlegeteils (32) und/oder der Positioniereinheit (42) zu ermitteln und entsprechende Positionssignale an eine Steuerung der Werkzeughälfte (12) zu übermitteln, welche dazu eingerichtet ist, in Abhängigkeit von den Sensorsignalen die Positioniereinheit (42) zum Befördern des Einlegeteils (32) in die Spritzgussposition anzusteuern.

2. Werkzeughälfte (12) nach Anspruch 1,
**dadurch gekennzeichnet, dass**
die Steuerung dazu eingerichtet ist, die Spritzgussmaschine (10) zum Herstellen des Spritzgussteils anzusteuern, wenn sich das Einlegeteil (32) in der Spritzgussposition befindet, in Folge dessen ein die Werkzeughälfte (12) umfassendes Spritzgusswerkzeug der Spritzgussmaschine (10) geschlossen, ein Kunststoff (56) in die Kavität (30) gespritzt und das in der Spritzgussposition angeordnete Einlegeteil (32) unter Ausbildung des Spritzgussteils vom Kunststoff (56) umspritzt wird.

3. Werkzeughälfte (12) nach Anspruch 1 oder 2,
**dadurch gekennzeichnet, dass**
die Steuerung der Werkzeughälfte (12) dazu ausgelegt ist, eine Zuführperipherie (16) zum Zuführen der Einlegeteile (32) anzusteuern, welche dazu ausgelegt ist, eine Vielzahl der Einlegeteile (32) zu vereinzeln und pneumatisch über einen Schlauch (20) zumindest mittelbar zum Zuführkanal (38) zu befördern.

4. Werkzeughälfte (12) nach einem der vorhergehenden Ansprüche,
**dadurch gekennzeichnet, dass**
die Werkzeughälfte (12) ein am Zuführkanal (38) montierbares Magazin (26) zum Aufnehmen mehrerer der Einlegeteile (32) aufweist, welches dazu ausgelegt ist, die Einlegeteile (32) zu vereinzeln und dem Zuführkanal (38) zuzuführen, wobei die Steuerung der Werkzeughälfte (12) dazu ausgelegt ist, das Magazin (26) zum Zuführen der jeweiligen Einlegeteile (32) anzusteuern.

5. Werkzeughälfte (12) nach einem der vorhergehenden Ansprüche,
**dadurch gekennzeichnet, dass**
die Werkzeughälfte (12) einen Kernzug (46) zum Bewegen der Positioniereinheit (42) zwischen der Entformposition und der Spritzposition aufweist.

6. Werkzeughälfte (12) nach Anspruch 5,
**dadurch gekennzeichnet, dass**
die Sensorik dazu ausgelegt ist, jeweilige Endlagen des Kernzugs (46) zu erfassen.

7. Werkzeughälfte (12) nach einem der vorhergehenden Ansprüche,
**dadurch gekennzeichnet, dass**
die Positioniereinheit (42) eine stiftförmige Aufnahmeeinheit aufweist, die dazu ausgelegt ist, in eine Öffnung des im Aufnahmebereich (40) angeordneten Einlegeteils (32) einzudringen und es dadurch aufzunehmen.

8. Werkzeughälfte (12) nach einem der Ansprüche 1 bis 6,
**dadurch gekennzeichnet, dass**
die Positioniereinheit (42) eine hülsenartige Aufnahmeeinheit aufweist, die dazu ausgelegt ist, einen Schaft des im Aufnahmebereich (40) angeordnetem Einlegeteils (32) zu umschließen und es dadurch aufzunehmen.

9. Werkzeughälfte (12) nach einem der vorhergehenden Ansprüche,
**dadurch gekennzeichnet, dass**
die Werkzeughälfte (12) eine Fixiereinheit (52) aufweist, die dazu ausgelegt ist, das im Aufnahmebereich (40) angeordnete Einlegeteil (32) so lange zu fixieren, bis die Positioniereinheit (42) das Einlegeteil (32) aufgenommen hat.

10. Werkzeughälfte (12) nach einem der vorhergehenden Ansprüche,
**dadurch gekennzeichnet, dass**
die Werkzeughälfte (12) eine Verriegelungseinheit aufweist, welche dazu ausgelegt ist, die Positioniereinheit (42) in ihrer Spritzposition zu verriegeln, in der das mittels der Positioniereinheit (42) aufgenommene Einlegeteil (32) in der Spritzgussposition angeordnet ist.

11. Verfahren zum Herstellen eines Spritzgussteils mit wenigstens einem Einlegeteil (32) mittels einer Werkzeughälfte (12) nach einem der vorhergehenden Ansprüche, umfassend die Schritte:
- Zuführen des Einlegeteils (32) in den Zuführkanal (38), wonach das Einlegeteil (32) schwerkraftbedingt in den Aufnahmebereich (40) des Beförderungskanals (36) gelangt;
- Bewegen der Positioniereinheit (42) von der Entformposition bis zur Spritzposition, in Folge dessen die Positioniereinheit das im Aufnahmebereich (40) angeordnete Einlegeteil (32) aufnimmt und danach bis zur Spritzgussposition im Bereich des Formbereichs (28) befördert;
- Ansteuern einer Spritzgussmaschine (10) zum Herstellen des Spritzgussteils mittels der Steuerung der Werkzeughälfte (12), sodass ein die Werkzeughälfte (12) umfassendes Spritzgusswerkzeug der Spritzgussmaschine (10) geschlossen, ein Kunststoff (56) in die Kavität (30) gespritzt und das in der Spritzgussposition angeordnete Einlegeteil (32) unter Ausbildung des Spritzgussteils vom Kunststoff (56) umspritzt wird,
- wobei eine Sensorik dazu ausgelegt ist, eine Position des Einlegeteils (32) und/oder der Positioniereinheit (42) zu ermitteln und entsprechende Positionssignale an eine Steuerung der Werkzeughälfte (12) zu übermitteln, welche dazu eingerichtet ist, in Abhängigkeit von den Sensorsignalen die Positioniereinheit (42) zum Befördern des Einlegeteils (32) in die Spritzgussposition anzusteuern.

12. Verfahren nach Anspruch 11,
**dadurch gekennzeichnet, dass**
die Steuerung eine Zuführperipherie (16) und/oder ein an der Werkzeughälfte (12) angebrachtes Magazin (26) derart ansteuert, dass das Einlegeteil (32) vereinzelt und dem Zuführkanal (38) zugeführt wird.

13. Verfahren nach Anspruch 11 oder 12,
**dadurch gekennzeichnet, dass**
die Sensorik das Zuführen des Einlegeteils (32) und/oder die Anordnung des Einlegeteils (32) im Aufnahmebereich (40) des Beförderungskanals (38) überwacht sowie entsprechende Sensorsignale an die Steuerung übermittelt.

14. Verfahren nach einem der Ansprüche 11 bis 13,
**dadurch gekennzeichnet, dass**
die Steuerung zum Befördern des Einlegeteils (32) in die Spritzgussposition eine Bewegung der Positioniereinheit (42) von der Entformposition zur Spritzposition initiiert, nachdem erfasst wurde, dass das Einlegeteil (32) in den Aufnahmebereich (40) gelangt ist.

15. Verfahren nach einem der Ansprüche 11 bis 14,
**dadurch gekennzeichnet, dass**
die Steuerung eine Bewegung der Positioniereinheit (42) während einer Abkühlzeit des Spritzgussteils von der Spritzposition zur Entformposition initiiert, nachdem der Spritzgussvorgang beendet wurde.

## Claims

1. Tool half (12) for an injection moulding machine (10) for producing an injection moulded part with at least one insert part (32), comprising
- a mould region (28), which forms at least part of a cavity (30) for the injection moulded part;
- a transport channel (36) extending inside the tool half (12) and through the mould region (28);
- a feed channel (38), which is designed to feed the insert part (32) into the tool half (12), extends vertically through the tool half (12) and leads into a take-up region (40) of the transport channel (36) ;
- a positioning unit (42), which is designed, by virtue of a movement from a demoulding position into an injecting position, to take up the insert part (32) when said insert part is arranged in the take-up region (40) of the transport channel (36), and to transport the taken-up insert part (32) from the take-up region (40) to an injection moulding position in the region of the mould region (28);
- a sensor system, which is designed to determine a position of the insert part (32) and/or of the positioning unit (42) and to transmit corresponding position signals to a controller of the tool half (12), which controller is configured to actuate the positioning unit (42) for the purpose of transporting the insert part (32) into the injection moulding position in dependence on the sensor signals.

2. Tool half (12) according to Claim 1,
**characterized in that**
the controller is configured to actuate the injection moulding machine (10) for the purpose of producing the injection moulded part when the insert part (32) is located in the injection moulding position, as a consequence of which an injection moulding tool, comprising the tool half (12), of the injection moulding machine (10) is closed, a plastics material (56) is injected into the cavity (30) and the plastics material (56) is injection moulded around the insert part (32) arranged in the injection moulding position so as to form the injection moulded part.

3. Tool half (12) according to Claim 1 or 2,
**characterized in that**
the controller of the tool half (12) is designed to actuate a peripheral feed device (16) for the purpose of feeding the insert parts (32), which peripheral feed device is designed to separate a multiplicity of the insert parts (32) and to transport them pneumatically via a hose (20) at least indirectly to the feed channel (38).

4. Tool half (12) according to one of the preceding claims,
**characterized in that**
the tool half (12) has a magazine (26) for taking up multiple insert parts (32), which magazine can be mounted on the feed channel (38) and is designed to separate the insert parts (32) and to feed them to the feed channel (38), wherein the controller of the tool half (12) is designed to actuate the magazine (26) for the purpose of feeding the respective insert parts (32).

5. Tool half (12) according to one of the preceding claims,
**characterized in that**
the tool half (12) has a core puller (46) for moving the positioning unit (42) between the demoulding position and the injecting position.

6. Tool half (12) according to Claim 5,
**characterized in that**
the sensor system is designed to detect respective end positions of the core puller (46).

7. Tool half (12) according to one of the preceding claims,
**characterized in that**
the positioning unit (42) has a pin-shaped take-up unit, which is designed to enter an opening in the insert part (32) arranged in the take-up region (40) and to take up said insert part as a result.

8. Tool half (12) according to one of Claims 1 to 6,
**characterized in that**
the positioning unit (42) has a sleeve-like take-up unit, which is designed to enclose a shaft of the insert part (32) arranged in the take-up region (40) and to take up said insert part as a result.

9. Tool half (12) according to one of the preceding claims,
**characterized in that**
the tool half (12) has a fixing unit (52), which is designed to fix the insert part (32) arranged in the take-up region (40) until the positioning unit (42) has taken up the insert part (32).

10. Tool half (12) according to one of the preceding claims,
**characterized in that**
the tool half (12) has a locking unit, which is designed to lock the positioning unit (42) in its injecting position, in which the insert part (32) taken up by means of the positioning unit (42) is arranged in the injection moulding position.

11. Method for producing an injection moulded part with at least one insert part (32) by means of a tool half (12) according to one of the preceding claims, comprising the following steps:
- feeding the insert part (32) into the feed channel (38), after which gravity causes the insert part (32) to enter the take-up region (40) of the transport channel (36);
- moving the positioning unit (42) from the demoulding position to the injecting position, as a result of which the positioning unit takes up the insert part (32) arranged in the take-up region (40) and then transports it to the injection moulding position in the region of the mould region (28) ;
- actuating an injection moulding machine (10) for the purpose of producing the injection moulded part by means of the controller of the tool half (12), with the result that an injection moulding tool, comprising the tool half (12), of the injection moulding machine (10) is closed, a plastics material (56) is injected into the cavity (30) and the plastics material (56) is injection moulded around the insert part (32) arranged in the injection moulding position so as to form the injection moulded part,
- wherein a sensor system is designed to determine a position of the insert part (32) and/or of the positioning unit (42) and to transmit corresponding position signals to a controller of the tool half (12), which controller is configured to actuate the positioning unit (42) for the purpose of transporting the insert part (32) into the injection moulding position in dependence on the sensor signals.

12. Method according to Claim 11,
**characterized in that**
the controller actuates a peripheral feed device (16) and/or a magazine (26) attached to the tool half (12) in such a way that the insert part (32) is separated and fed to the feed channel (38).

13. Method according to Claim 11 or 12,
**characterized in that**
the sensor system monitors the feeding of the insert part (32) and/or the arrangement of the insert part (32) in the take-up region (40) of the transport channel (38) and transmits corresponding sensor signals to the controller.

14. Method according to one of Claims 11 to 13,
**characterized in that**,
for the purpose of transporting the insert part (32) into the injection moulding position, the controller initiates a movement of the positioning unit (42) from the demoulding position to the injecting position upon detection that the insert part (32) has entered the take-up region (40).

15. Method according to one of Claims 11 to 14,
**characterized in that**
the controller initiates a movement of the positioning unit (42) from the injecting position to the demoulding position during a cooling-down time of the injection moulded part, after the end of the injection moulding operation.

## Revendications

1. Moitié d'outil (12) pour une machine de moulage par injection (10) servant à la fabrication d'une pièce moulée par injection pourvue d'au moins une pièce d'insertion (32), comportant
- une région de moule (28), qui forme au moins une partie d'une cavité (30) pour la pièce moulée par injection ;
- un canal de transport (36) s'étendant à l'intérieur de la moitié d'outil (12) et à travers la région de moule (28) ;
- un canal d'acheminement (38) conçu pour l'acheminement de la pièce d'insertion (32) dans la moitié d'outil (12), lequel canal s'étend dans la direction verticale à travers la moitié d'outil (12) et débouche dans une région de réception (40) du canal de transport (36) ;
- une unité de positionnement (42) qui est conçue pour recevoir la pièce d'insertion (32) par un déplacement d'une position de démoulage à une position d'injection, lorsque celle-ci est disposée dans la région de réception (40) du canal de transport (36), et pour transporter la pièce d'insertion (32) reçue à partir de la région de réception (40) jusqu'à une position de moulage par injection dans la zone de la région de moule (28) ;
- un système de capteurs, lequel est conçu pour déterminer une position de la pièce d'insertion (32) et/ou de l'unité de positionnement (42) et pour transmettre des signaux de position correspondants à une commande de la moitié d'outil (12), laquelle est configurée pour commander, en fonction des signaux de capteur, l'unité de positionnement (42) pour le transport de la pièce d'insertion (32) dans la position de moulage par injection.

2. Moitié d'outil (12) selon la revendication 1,
**caractérisée en ce que**
la commande est configurée pour commander la machine de moulage par injection (10) pour la fabrication de la pièce moulée par injection, lorsque la pièce d'insertion (32) se trouve dans la position de moulage par injection, à la suite de quoi un outil de moulage par injection, comportant la moitié d'outil (12), de la machine de moulage par injection (10) est fermé, une matière synthétique (56) est injectée dans la cavité (30) et la pièce d'insertion (32) disposée dans la position de moulage par injection est surmoulée avec la matière synthétique (56) en formant la pièce moulée par injection.

3. Moitié d'outil (12) selon la revendication 1 ou 2,
**caractérisée en ce que**
la commande de la moitié d'outil (12) est conçue pour commander un équipement périphérique d'acheminement (16) pour l'acheminement des pièces d'insertion (32), lequel équipement périphérique est conçu pour séparer une pluralité de pièces d'insertion (32) et pour les transporter de manière pneumatique par le biais d'un tuyau (20) au moins indirectement jusqu'au canal d'acheminement (38).

4. Moitié d'outil (12) selon l'une des revendications précédentes,
**caractérisée en ce que**
la moitié d'outil (12) comprend un magasin (26) pouvant être monté sur le canal d'acheminement (38) pour la réception de plusieurs des pièces d'insertion (32), lequel magasin est conçu pour séparer les pièces d'insertion (32) et pour les acheminer au canal d'acheminement (38), la commande de la moitié d'outil (12) étant conçue pour commander le magasin (26) pour l'acheminement des pièces d'insertion (32) respectives.

5. Moitié d'outil (12) selon l'une des revendications précédentes,
**caractérisée en ce que**
la moitié d'outil (12) comprend un tire-noyau (46) pour le déplacement de l'unité de positionnement (42) entre la position de démoulage et la position d'injection.

6. Moitié d'outil (12) selon la revendication 5,
**caractérisée en ce que**
le système de capteurs est conçu pour détecter des positions finales respectives du tire-noyau (46).

7. Moitié d'outil (12) selon l'une des revendications précédentes,
**caractérisée en ce que**
l'unité de positionnement (42) comprend une unité de réception en forme de goupille, laquelle est conçue pour pénétrer dans une ouverture de la pièce d'insertion (32) disposée dans la région de réception (40) et pour ainsi la recevoir.

8. Moitié d'outil (12) selon l'une des revendications 1 à 6,
**caractérisée en ce que**
l'unité de positionnement (42) comprend une unité de réception de type douille, laquelle est conçue pour entourer une tige de la pièce d'insertion (32) disposée dans la région de réception (40) et pour ainsi la recevoir.

9. Moitié d'outil (12) selon l'une des revendications précédentes,
**caractérisée en ce que**
la moitié d'outil (12) comprend une unité de fixation (52) qui est conçue pour fixer la pièce d'insertion (32) disposée dans la région de réception (40) jusqu'à ce que l'unité de positionnement (42) ait reçu la pièce d'insertion (32).

10. Moitié d'outil (12) selon l'une des revendications précédentes,
**caractérisée en ce que**
la moitié d'outil (12) comprend une unité de verrouillage, laquelle est conçue pour verrouiller l'unité de positionnement (42) dans sa position d'injection, dans laquelle la pièce d'insertion (32) reçue au moyen de l'unité de positionnement (42) est disposée dans la position de moulage par injection.

11. Procédé de fabrication d'une pièce moulée par injection pourvue d'au moins une pièce d'insertion (32) au moyen d'une moitié d'outil (12) selon l'une des revendications précédentes, comportant les étapes suivantes :
- acheminement de la pièce d'insertion (32) dans le canal d'acheminement (38), après quoi la pièce d'insertion (32) parvient dans la région de réception (40) du canal de transport (36) sous l'effet de la gravité ;
- déplacement de l'unité de positionnement (42) à partir de la position de démoulage jusqu'à la position d'injection, à la suite de quoi l'unité de positionnement reçoit la pièce d'insertion (32) disposée dans la région de réception (40) et la transporte ensuite jusqu'à la position de moulage par injection dans la zone de la région de moule (28) ;
- commande d'une machine de moulage par injection (10) servant à la fabrication de la pièce moulée par injection au moyen de la commande de la moitié d'outil (12), de sorte qu'un outil de moulage par injection, comportant la moitié d'outil (12), de la machine de moulage par injection (10) soit fermé, qu'une matière synthétique (56) soit injectée dans la cavité (30) et que la pièce d'insertion (32) disposée dans la position de moulage par injection soit surmoulée avec la matière synthétique (56) en formant la pièce moulée par injection,
- un système de capteurs étant conçu pour déterminer une position de la pièce d'insertion (32) et/ou de l'unité de positionnement (42) et pour transmettre des signaux de position correspondants à une commande de la moitié d'outil (12), laquelle est configurée pour commander, en fonction des signaux de capteur, l'unité de positionnement (42) pour le transport de la pièce d'insertion (32) dans la position de moulage par injection.

12. Procédé selon la revendication 11,
**caractérisé en ce que**
la commande commande un équipement périphérique d'acheminement (16) et/ou un magasin (26) installé sur la moitié d'outil (12), de telle sorte que la pièce d'insertion (32) soit séparée et acheminée au canal d'acheminement (38).

13. Procédé selon la revendication 11 ou 12,
**caractérisé en ce que**
le système de capteurs surveille l'acheminement de la pièce d'insertion (32) et/ou la disposition de la pièce d'insertion (32) dans la région de réception (40) du canal de transport (38) et transmet des signaux de capteur correspondants à la commande.

14. Procédé selon l'une des revendications 11 à 13,
**caractérisé en ce que**
la commande, pour le transport de la pièce d'insertion (32) dans la position de moulage par injection, amorce un déplacement de l'unité de positionnement (42) à partir de la position de démoulage jusqu'à la position d'injection, après qu'il a été détecté que la pièce d'insertion (32) est parvenue dans la région de réception (40) .

15. Procédé selon l'une des revendications 11 à 14,
**caractérisé en ce que**
la commande amorce un déplacement de l'unité de positionnement (42) pendant un temps de refroidissement de la pièce moulée par injection de la position d'injection à la position de démoulage, après que l'opération de moulage par injection a été terminée.
